Europäisches Patentamt

European Patent Office

Office européen des brevets

(11) Publication number: **0 039 544**
**B1**

(12) **EUROPEAN PATENT SPECIFICATION**

(45) Date of publication of patent specification: **30.01.85**

(21) Application number: **81301541.9**

(22) Date of filing: **08.04.81**

(51) Int. Cl.⁴: **G 02 B 3/10, G 02 C 7/06**

(54) Progressive multi-focal lenses.

(30) Priority: **12.04.80 JP 48535/80**

(43) Date of publication of application:
**11.11.81 Bulletin 81/45**

(45) Publication of the grant of the patent:
**30.01.85 Bulletin 85/05**

(84) Designated Contracting States:
**AT BE CH DE FR GB IT LI LU NL SE**

(56) References cited:
**FR-A-2 344 043**
**FR-A-2 393 335**
**GB-A-2 020 847**
**NL-A-7 410 793**
**US-A-3 687 528**

(73) Proprietor: **Kabushiki Kaisha Hoya Lens**
**Kowada 25-banchi, Itsukaichimachi**
**Nishitamagun, Tokyo (JP)**

(72) Inventor: **Kitani, Akira**
**Minami-Denen, 3-11-5**
**Fussa-City Tokyo (JP)**

(74) Representative: **Harrison, David Christopher**
**et al**
**MEWBURN ELLIS & CO 2/3 Cursitor Street**
**London EC4A 1BQ (GB)**

Courier Press, Leamington Spa, England.

## Description

This invention relates to an improvement in progressive multi-focal lenses, and more particularly relates to an ophthalmic lens having a so-called progressive refractive surface. In this type of construction a surface refractive power (or index) is progressively increased vertically from an upper portion to a lower portion of the lens, as the line of sight scans from a distant view to a near view, so as to help the control (or accommodation) of the human eyes.

Although the progressive refractive surface may be formed on a convex, a concave, or a convex-concave surface, it is generally formed on the convex surface side. For simplification in explanation, the present discussion deals with an example where the progressive refractive surface is formed on a convex surface side. It should be understood, however, that this invention is of course also applicable to either a concave or a concave-convex surface.

A general construction of the conventional progressive refractive surface comprises a spheric distant viewing zone having a desired surface refractive power at the top, a spheric near viewing zone having a desired surface refractive power larger than that of the distant viewing zone, and an aspheric progressive viewing zone which is formed between the two other zones. The progressive zone is a serial smooth local area such that its surface refractive power progressively increases along a vertical direction.

Most of this kind of progressive multi-focal lenses operate such that when a person moves his or her line of sight from distant viewing to near viewing, the line of sight moves essentially along this progressive zone. However, these conventional progressive multi-focal lenses have areas with a large astigmatism to the side of the progressive zone and the near viewing zone, and so normal sight to the side is restricted.

Various proposals have been made to overcome this drawback of the side area having said astigmatism. These include arrangements disclosed in US—A—3,687,528; 3,910,691; 4,055,379; 4,056,311; and 4,062,629; and DE—A—2610203. All of these propose to dilute the astigmatism or render it harmless, but are not successful in essential elimination of the astigmatism. Hence, every one of these prior art approaches still has considerable astigmatism at the sides of the progressive zone and the near viewing zone, and in this portion of the lens the area of sight provided for the wearer is narrower than that provided for the wearer of a normal mono-focal lens.

GB—A—2020847 shows a progressive multi-focal lens having side surfaces. The surface of the lens is composed of two geometric surfaces, one of which provides the surface of the distant viewing, progressive and near viewing zones and the other of which provides the surface of the side zones. The object of this construction is to minimise vertical shifts in the viewed scene of the boundaries of the side zones. Both geometric surfaces have varying curvatures and thus varying refractive powers. Again, the side zones create considerable astigmatism. The selection of the two geometric surfaces allows some choice in the shapes of the zones. However, this choice is limited by the necessity for the two side zones to belong to the same geometric surface.

The present invention seeks to provide a progressive multi-focal ophthalmic lens which eliminates these drawbacks of the prior art. Accordingly, the invention provides a progressive multi-focal lens comprising:

a spheric distant viewing zone at the upper portion of the lens having a desired surface refractive power;

a spheric near viewing zone at the lower portion of the lens having a surface refractive power larger than that of the distant viewing zone;

a progressive zone between the distant viewing zone and the near viewing zone having a surface refractive power progressively increasing in the direction from the distant viewing zone to the near viewing zone; and

two side surfaces having refractive powers larger than that of the distant viewing zone, disposed one to the left and one to the right of the progressive zone and the near viewing zone,

characterised in that the side surfaces are spheric but have different spheric centres.

Since the astigmatic zones of the prior art are now formed with spheric surfaces they have no astigmatism. The most appropriate, and preferred, refractive power for the spheric side surfaces is the dioptric power or refractive power (or index) which is the arithmetic mean of those of the distant viewing zone and the near viewing zone. When these surfaces have a power larger than that of the distant view zone, the field of sight can be broadened significantly for intermediate distances.

A lens according to the present invention resembles the prior art lenses in that it still has a portion composed of a distant viewing zone, a progressive zone and a near viewing zone, and these can be made to join smoothly with no demarcations which are easily noticeable from the outside or by a third person. However, the spheric side surfaces of a lens according to the present invention cannot, as a matter of geometry, be joined to that portion smoothly and directly without providing an intermediate curved surface.

Accordingly, an arbitrary arrangement of the demarcation between the serial convex surface and the spheric surface creates different levels between the two surfaces. However, the two surfaces are preferably respectively extended, thus resulting in a line of intersection, which is used as the demarcation line. With this arrangement there is no difference in level across over the entire demarcation line, which is aesthetically advantageous. Additionally, the demarcation can be arranged so that it can hardly be seen from outside, by providing a serial smooth convex surface at the junction, which is visually preferable.

Fig. 1 is a front view of the conventional progressive multi-focal lens;

Fig. 2 is a perspective view of Fig. 1;

Fig. 3 is a front view of the progressive multi-focal lens of the embodiment of this invention; and

Fig. 4 is a perspective view of the Fig. 3.

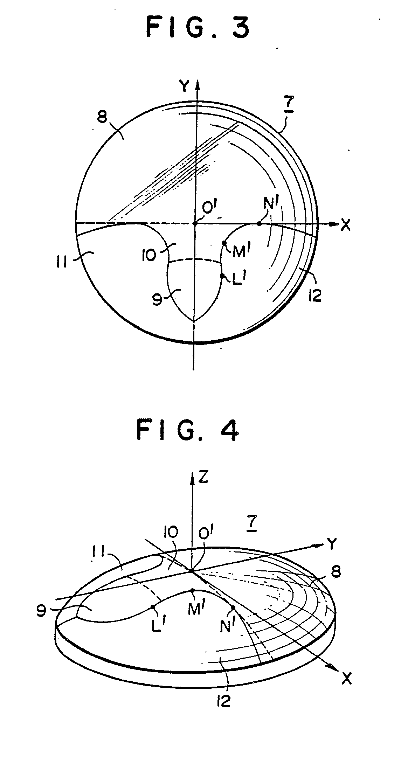

A preferred embodiment of this invention will be hereinafter discussed with reference to Fig. 3 and 4 of the accompanying drawings.

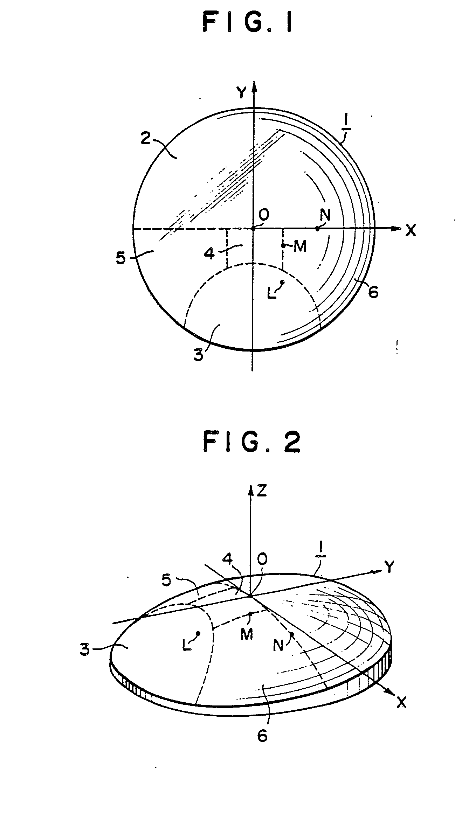

Figs. 1 and 2 respectively show a front view and a perspective view of an example of the prior art progressive multi-focal lens. A lens 1 comprises a distant viewing zone 2, a near viewing zone 3, a progressive zone 4, and side zones 5, 6 beside the progressive and near viewing zones. The side zones are hereinafter referred to as a right side and a left side zone respectively.

Figs. 3 and 4 respectively show a front view and a perspective view of one embodiment of the progressive multi-focal ophthalmic lens in accordance with the present invention.

The lens 7 comprises a distant viewing zone 8, a near viewing zone 9, a progressive zone 10, side portions 11, 12 beside the progressive zone and the near viewing zone, with the side zones hereinafter referred to as a right side zone and a left side zone. Those zone demarcation or junction lines indicated in solid line in the lenses 1, 7 are easily distinguished visually from the outside or by a third person. Those demarcations indicated in dotted lines are not easily distinguished.

The convex surfaces of the right and left side zones 11, 12 are spheric. In this embodiment the dioptric refractive power of the spheric surfaces of both side zones 11, 12 is the arithmetic mean value of the refractive power of the zones 8, 9.

The continuous convex surface comprising zones 2, 3, 4 of the lens 1 is the same as the continuous completely iso-curved surface (progressive refractive surface) comprising zones 8, 9, 10 of the lens 7, with the forms of the zones not being substantially different.

A positional relationship between the continuous surfaces 8, 9, 10 and the side surfaces 11, 12, conveniently determined the position of the centre of curvature of the surfaces 11, 12 and the positions of the demarcations.

To this end, and for convenience of explanation, orthogonal coordinate axes X, Y, Z are defined in marked directions with origins, each origin being defined at the geometric centre of the lens, respectively shown in Figs. 1, 2, 3 and 4. The Z axis is perpendicular to the paper in Figs. 1 and 3. Points O in Figs. 1 and 2, and points O' in Figs. 3 and 4 respectively indicate the geometric centres of each lens.

First, provided on the progressive refractive surface of the prior art progressive multi-focal lens 1 shown in Figs. 1 and 2 are three points $L(X_L, Y_L, Z_L)$ $M(X_M, Y_M, Z_M)$, and $N(X_N, Y_N, Z_N)$, which are points for demarcation of the left side zone with the areas of desired distant, progressive and near viewing zones respectively.

The X, Y axes points of each L, M, N may be arbitrarily determined, in this case $X_L$ (X coordinate of the point L) is selected to be 8 mm, $Y_L$ (Y coordinate) to be −15 mm, $X_m$ (X coordinate of the point M) to be 8 mm, $Y_M$ (Y coordinate) to be −5 mm, $X_N$ (X coordinate of the point N) to be 18 mm, and $Y_N$ (Y coordinate) to be 0 mm.

The Z coordinates are easily determined for this prior art construction for the selected X and Y coordinates, since these three points, L, M, N have all been selected to be on the progressive refractive surface of the conventional progressive multi-focal lens as mentioned above.

The parameters of the lens of the present embodiment of the invention are derived as follows. A radius of curvature R for the left side zone spheric surface and a centre of curvature Q, having X, Y, Z coordinates $X_Q, Y_Q, Z_Q$ respectively, are to be derived. The value of R can be derived easily since in this embodiment the refractive power of the spheric surface is to be the arithmetic mean of those of the distant and the near viewing zones.

The three points, L, M, N lie obth on the progressive refractive surface and on the spheric surface, because these three points have been chosen as lying on the junction between the surfaces.

Accordingly, the following equations describe the relationship between R and and X, Y, and Z coordinates of the points L, M, N and Q.

(1) $R^2 = (X_L - X_Q)^2 + (Y_L - Y_Q)^2 + (Z_L - Z_Q)^2$
(2) $R^2 = (X_M - X_Q)^2 + (Y_M - Y_Q)^2 + (Z_M - Z_Q)^2$
(3) $R^2 = (X_N - X_Q)^2 + (Y_N - Y_Q)^2 + (Z_N - Z_Q)^2$

Solving the above three equations simultaneously gives coordinates $X_Q, Y_Q$, and $Z_Q$, of Q.

Although the above discussion has been with reference to the left side zone of the lens, it also applies to the right side zone. In this way the conventional progressive multi-focal lens shown in Figs. 1 and 2 is transformed into a progressive multi-focal lens embodying the present invention as shown in Figs. 3 and 4. The points L', M', N' shown in Figs. 3 and 4 correspond to the points L, M, N shown in Figs. 1 and 2.

Although in this embodiment, the left and right spheric surfaces are symmetric, this need not be so. The two side zones may be asymmetric. It should be understood that such a construction falls within the scope of this invention.

Thus, by use of the present invention the large astigmatism found in conventional progressive lenses can be eliminated, and a normal side view field with no distortion or blurring of the image can be provided.

Furthermore, if the spheric surface refractive power is made to be the arithmetic mean value of the refractive powers of the distant and the near viewing zones, the area through which intermediate distances can be seen is greatly enhanced. In the prior art intermediate sight was only possible through the portion near the centre of the progressive zone. Thus, a lens may be provided according to the present invention which is quite a convenient progressive multi-focal lens. Provision of a continuous smooth surface at the junctions between the distant, the progressive, and the near viewing zones on the one hand, and the left and the right side regions on the other, permits the zone demarcations to be hardly distinguishable from the outside or by a third person.

## Claims

1. A progressive multi-focal lens comprising:
a spheric distant viewing zone (8) at the upper portion of the lens having a desired surface refractive power;
a spheric near viewing zone (9) at the lower portion of the lens having a surface refractive power larger than that of the distant viewing zone (8);
a progressive zone (10) between the distant viewing zone (8) and the near viewing zone (9) having a surface refractive power progressively increasing in the direction from the distant viewing zone (8) to the near viewing zone (9); and
two side surfaces (11, 12) having refractive powers larger than that of the distant viewing zone (8) but smaller than that of the near viewing zone (9), disposed one to the left and one to the right of the progressive zone (10) and the near viewing zone (9),
characterised in that the side surfaces (11, 12) are spheric but have different spheric centres.

2. A lens according to Claim 1 in which the surface refractive power of the said side surfaces (11, 12) is the arithmetic mean of the surface refractive powers of the distant viewing zone (8) and the near viewing zone (9).

3. A lens according to Claim 1 or Claim 2, wherein each said side surface (11, 12) joins the portion of the lens composed of the said distant viewing, near viewing and progressive zones (8, 9, 10) along a line at which there is a continuous and smooth transition between the said portion and the said surface.

## Revendications

1. Lentille multi-foyers progressive qui comporte:
à la partie supérieure, une zone sphérique de vision à distance (8) présentant un pouvoir de réfraction de surface voulu;

à la partie inférieure, une zone sphérique de vision rapprochée (9) présentant un pouvoir de réfraction de surface plus grand que celui de la zone de vision à distance (8);

une zone progressive (10) prévue entre la zone de vision à distance (8) et la zone de vision rapprochée (9) et présentant un pouvoir de réfraction de surface qui augmente progressivement de la zone de vision à distance (8) vers la zone de vision rapprochée (9), et

deux surfaces latérales (11 et 12) présentant des pouvoirs de réfraction plus grands que celui de la zone de vision à distance (8), mais plus faibles que celui de la zone de vision rapprochée (9), et prévues, l'une, à la gauche et, l'autre, à la droite de la zone progressive (10) et de la zone de vision rapprochée (9),

la lentille multi-foyers progressive étant caractérisée en ce que les surfaces latérales (11 et 12) sont sphériques, mais ont des centres de sphéricité différents.

2. Lentille suivant la revendication 1, caractérisé en ce que le pouvoir de réfraction de surface des surfaces latérales précitées (11 et 12) est la moyenne arithmétique des pouvoirs de réfraction de surface de la zone de vision à distance (8) et de la zone de vision rapprochée (9).

3. Lentille suivant l'une ou l'autre des revendications 1 et 2, caractérisé en ce que chacune des surfaces latérales précitées (11 et 12) rejoint la partie de la lentille se composant de la zone de vision à distance précitée (8), de la zone de vision rapprochée précitée (9) et de la zone progressive précitée (10) suivant une ligne où il y a une transition continue et douce entre cette partie et la surface précitée.

## Patentansprüche

1. Progressive Multifokallinse mit einer kugelflächenförmigen Fernbetrachtungszone (8) im oberen Abschnitt der Linse mit gewünschter Oberflächenbrechkraft, einer kubelflächenförmigen Nahbetrachtungszone (9) im unteren Abschnitt der Linse mit einer Oberflächenbrechkraft, die stärker ist als jene der Fernbetrachtungszone (8), einer progressiven Zone (10) zwischen der Fernbetrachtungszone (8) und der Nahbetrachtungszone (9) mit einer Oberflächenbrechkraft, die progressiv in Richtung von der Fernbetrachtungszone (8) zur Nahbetrachtungszone (9) hin ansteigt und zwei Seitenflächen (11, 12) deren Brechkraft stärker ist als jene der Fernbetrachtungszone (8), jedoch schwächer ist als die der Nahbetrachtungszone (9), wobei eine der Seitenflächen links und eine rechts von der progressiven Zone (10) und der Nahbetrachtungszone (9) angeordnet ist, dadurch gekennzeichnet, daß die Seitenflächen (11, 12) kugelflächenförmig sind, jedoch verschiedene Kugelmittelpunkte aufweisen.

2. Linse nach Anspruch 1, dadurch gekennzeichnet, daß die Oberflächenbrechkraft der Seitenflächen (11, 12) den arithmetischen Mittelwert der Oberflächenbrechkräfte der Fernbetrachtungszone (8) und der Nahbetrachtungszone (9) darstellt.

3. Linse nach Anspruch 1 oder 2, dadurch gekennzeichnet, daß jede der Seitenflächen (11, 12) an den Abschnitt der Linse, der aus der Fernbetrachtungszone, der Nahbetrachtungszone und der progressiven Zone (8, 9, 10) zusammengesetzt ist, entlang einer Linie anstößt, auf welcher ein kontinuierlicher und glatter Übergang zwischen dem Abschnitt und der Fläche besteht.

# F I G. I

# F I G. 2

# FIG. 3

# FIG. 4